# EUROPEAN PATENT APPLICATION

(11) **EP 4 633 104 A1**
(43) Date of publication of application: **15.10.2025**
(21) Application number: 23900043.3
(22) Date of filing: 07.12.2023
(51) Int. Cl.: H04L 41/14

(54) **MODEL TRAINING METHOD, TERMINAL, AND NETWORK SIDE DEVICE**

(30) Priority: 08.12.2022 CN 202211579377; 07.04.2023 CN 202310372773
(71) Applicant: Vivo Mobile Communication Co., Ltd., Dongguan, Guangdong 523863 (CN)
(72) Inventor: CHENG, Sihan, Dongguan, Guangdong 523863 (CN); CHONG, Weiwei, Dongguan, Guangdong 523863 (CN)
(74) Representative: Conti, Marco
(86) International application number: PCT/CN2023/136968
(87) International publication number: WO 2024/120470

(57) **Abstract**

Embodiments of this application pertain to the field of communication technologies, and disclose a model training method, a terminal, and a network-side device. The model training method in the embodiments of this application includes: receiving, by a first device, a first message from a second device, where the first message is used to indicate termination or suspension of federated learning training; and performing, by the first device, a first operation based on the first message, where the first device includes a federated learning client, and the second device includes a federated learning server.

## Description

### CROSS-REFERENCE TO RELATED APPLICATIONS

This application claims priority to Chinese Patent Application No. 202211579377.8, filed with the China National Intellectual Property Administration on December 8, 2022, and entitled "MODEL TRAINING METHOD, TERMINAL, AND NETWORK-SIDE DEVICE", and Chinese Patent Application No. 202310372773.1, filed with the China National Intellectual Property Administration on April 7, 2023, and entitled "MODEL TRAINING METHOD, TERMINAL, AND NETWORK-SIDE DEVICE", both of which are incorporated herein by reference in their entireties.

### TECHNICAL FIELD

This application pertains to the field of communication technologies, and specifically relates to a model training method, a terminal, and a network-side device.

### BACKGROUND

Federated learning is intended to establish a federated learning model based on distributed data sets. In a training process of the federated learning model, information related to the federated learning model can be exchanged between all parties (or exchanged in an encrypted form), but original data cannot be exchanged, so that a private part of data on each site is not exposed.

The essence of horizontal federated learning lies in a combination of samples. The horizontal federated learning is applicable to scenarios in which participants are involved in a same service but serve different customers, that is, scenarios with significant feature overlap but little user overlap. For example, a core network domain and an access network domain in a communication network serve different users (that is, different terminals, corresponding to different samples) with a same service (that is, a session management service). By combining same data features from different samples of participants, the horizontal federated learning increases a quantity of training samples, thereby obtaining a better federated learning model.

In the related art, there is no corresponding processing mechanism after federated learning training is ended. After the federated learning training is ended, a client usually stays in a waiting state for a next round of training, resulting in occupation of a lot of space and computing power.

### SUMMARY

Embodiments of this application provide a model training method, a terminal, and a network-side device, to resolve a problem that a client cannot know the end of federated learning training and therefore cannot perform a next operation, resulting in occupation of space and computing power.

According to a first aspect, a model training method is provided and includes: receiving, by a first device, a first message from a second device, where the first message is used to indicate termination or suspension of federated learning training; and performing, by the first device, a first operation based on the first message, where the first device includes a federated learning client, and the second device includes a federated learning server.

According to a second aspect, a model training method is provided and includes: sending, by a second device, a first message to a first device, where the first message is used to indicate termination or suspension of federated learning training, where the first device includes a federated learning client, and the second device includes a federated learning server.

According to a third aspect, a model training apparatus is provided and applied to a first device, and includes: a receiving module, configured to receive a first message from a second device, where the first message is used to indicate termination or suspension of federated learning training; and a processing module, configured to perform a first operation based on the first message, where the first device includes a federated learning client, and the second device includes a federated learning server.

According to a fourth aspect, a model training apparatus is provided and applied to a second device, and includes: a sending module, configured to send a first message to a first device, where the first message is used to indicate termination or suspension of federated learning training, where the first device includes a federated learning client, and the second device includes a federated learning server.

According to a fifth aspect, a terminal is provided. The terminal includes a processor and a memory. The memory stores a program or instructions capable of running on the processor. When the program or instructions are executed by the processor, the steps of the method according to the first aspect or the second aspect are implemented.

According to a sixth aspect, a terminal is provided and includes a processor and a communication interface. The communication interface is configured to receive a first message from a second device, where the first message is used to indicate termination or suspension of federated learning training; and the processor is configured to perform a first operation based on the first message, where the terminal includes a federated learning client, and the second device includes a federated learning server. Alternatively, the communication interface is configured to send a first message to a first device, where the first message is used to indicate termination or suspension of federated learning training, where the first device includes a federated learning client, and the terminal includes a federated learning server.

According to a seventh aspect, a network-side device is provided. The network-side device includes a processor and a memory. The memory stores a program or instructions capable of running on the processor. When the program or instructions are executed by the processor, the steps of the method according to the first aspect or the second aspect are implemented.

According to an eighth aspect, a network-side device is provided and includes a processor and a communication interface. The communication interface is configured to receive a first message from a second device, where the first message is used to indicate termination or suspension of federated learning training; and the processor is configured to perform a first operation based on the first message, where the network-side device includes a federated learning client, and the second device includes a federated learning server. Alternatively, the communication interface is configured to send a first message to a first device, where the first message is used to indicate termination or suspension of federated learning training, where the first device includes a federated learning client, and the network-side device includes a federated learning server.

According to a ninth aspect, a model training system is provided and includes a terminal and a network-side device. The terminal may be configured to perform the steps of the method according to the first aspect, and the network-side device may be configured to perform the steps of the method according to the second aspect. Alternatively, the terminal may be configured to perform the steps of the method according to the second aspect, and the network-side device may be configured to perform the steps of the method according to the first aspect.

According to a tenth aspect, a readable storage medium is provided. The readable storage medium stores a program or instructions. When the program or instructions are executed by a processor, the steps of the method according to the first aspect are implemented, or the steps of the method according to the second aspect are implemented.

According to an eleventh aspect, a chip is provided. The chip includes a processor and a communication interface. The communication interface is coupled to the processor. The processor is configured to run a program or instructions to implement the steps of the method according to the first aspect or implement the steps of the method according to the second aspect.

According to a twelfth aspect, a computer program or program product is provided. The computer program or program product is stored in a storage medium. The computer program or program product is executed by at least one processor to implement the steps of the method according to the first aspect or implement the steps of the method according to the second aspect.

In the embodiments of this application, after the federated learning training is terminated or suspended, the server may send the first message to the client, where the first message is used to indicate termination or suspension of the federated learning training, so that the first device can know that the federated learning training is ended and can perform the first operation based on the first message, such as stopping local federated learning training, or deleting a local federated learning model, to avoid occupying space and computing power of the client and improve performance of the client.

### BRIEF DESCRIPTION OF DRAWINGS

FIG. 1 is a schematic diagram of a wireless communication system according to an embodiment of this application;
FIG. 2 is a schematic flowchart of a model training method according to an embodiment of this application;
FIG. 3 is a schematic flowchart of a model training method according to an embodiment of this application;
FIG. 4 is a schematic flowchart of a model training method according to an embodiment of this application;
FIG. 5 is a schematic structural diagram of a model training apparatus according to an embodiment of this application;
FIG. 6 is a schematic structural diagram of a model training apparatus according to an embodiment of this application;
FIG. 7 is a schematic structural diagram of a communication device according to an embodiment of this application;
FIG. 8 is a schematic structural diagram of a terminal according to an embodiment of this application;
FIG. 9 is a schematic structural diagram of a network-side device according to an embodiment of this application; and
FIG. 10 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

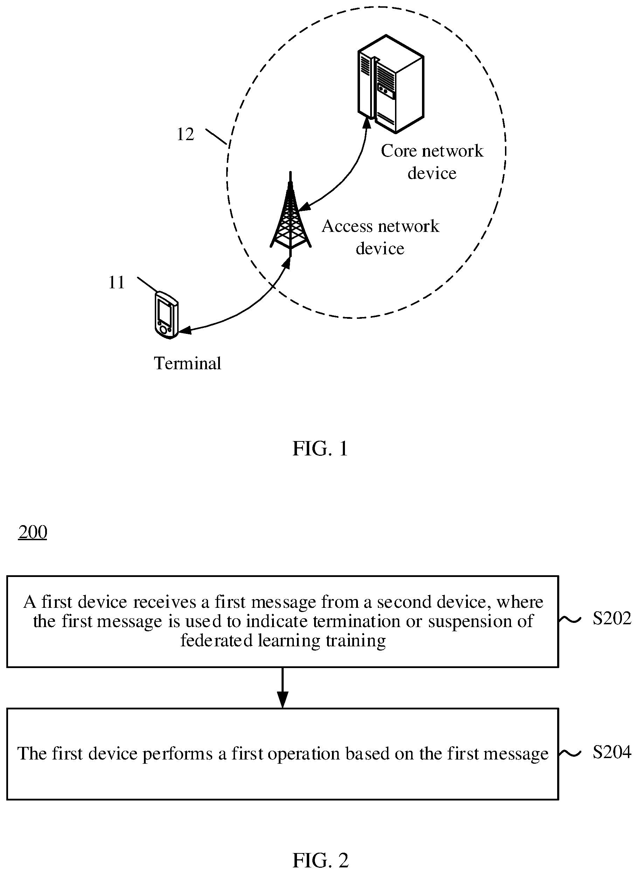

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network element. The access network device may include a base station, a WLAN access point, a Wi-Fi node, or the like. The base station may be referred to as a NodeB, an evolved NodeB (evolved Node B, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmission and Reception Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), or the like. It should be noted that in the embodiments of this application, only a core network device in the NR system is used as an example for description, but a specific type of the core network device is not limited.

A model training method provided in the embodiments of this application is hereinafter described in detail by using some embodiments and application scenarios thereof with reference to the accompanying drawings.

As shown in FIG. 2, an embodiment of this application provides a model training method 200. The method may be performed by a first device. In other words, the method may be performed by software or hardware installed in the first device. The method includes the following steps.

S202: The first device receives a first message from a second device, where the first message is used to indicate termination or suspension of federated learning training.

The first device in each embodiment of this application may be a federated learning client, where the client may be a terminal, an access network device, a core network device, or the like, and the core network device includes, for example, a model training logical function (Model Training Logical Function, MTLF) or an analytics logical function (Analytics Logical Function, AnLF). The second device may be a federated learning server, where the server may be a terminal, an access network device, a core network device, or the like, and the core network device includes, for example, an MTLF or an AnLF.

In this embodiment of this application, the first device may receive the first message from the second device, where the first message is used to indicate termination or suspension of the federated learning training. Termination of the federated learning training means that an entire federated learning process is ended for the first device and the second device. Suspension of the federated learning training means that the federated learning process is interrupted or ended for the first device.

S204: The first device performs a first operation based on the first message.

In this embodiment, after receiving the first message, the first device may perform the first operation based on internal logic, or perform the first operation based on recommendation information in the first message, where the recommendation information is described in detail later.

Optionally, before S202, the following steps may be included: (1) The server (server), that is, the second device, performs a member selection process. For example, the second device sends a request to an information storage device such as a network repository function (NF Repository Function, NRF), requesting to obtain capability information of intelligent network elements such as the MTLF, and determines, based on the capability information of the intelligent network elements, whether the intelligent network elements can participate in federated learning and determines members for the federated learning. (2) The second device sends information such as an initial federated learning model to each client (client), that is, the first device. (3) After performing local training, each first device feeds back an interim result such as a gradient to the second device. (4) The second device aggregates interim results and updates the federated learning model. After the steps of member selection, interim model delivery, local training, interim result feedback, and aggregation for updating a global model are repeated for multiple times, the training can be stopped when the federated learning model converges or other conditions are met.

In the model training method provided in this embodiment of this application, after the federated learning training is terminated or suspended, the server may send the first message to the client, where the first message is used to indicate termination or suspension of the federated learning training. Therefore, the first device can know the end of the federated learning training, and can perform the first operation based on the first message, such as stopping local federated learning training or deleting a local federated learning model, to avoid occupying space and computing power of the client and improve performance of the client.

A corresponding processing mechanism after the end of the federated learning training is defined in this embodiment of this application, so that an entire execution process of the federated learning is more complete.

Optionally, the first message may include at least one of the following:
(1) Information indicating termination of the federated learning training, that is, the second device explicitly indicates termination of the federated learning training, so that the first device can perform the first operation based on the internal logic of the first device or recommendation information or the like in the following (7). Information in the following (2) to (7) may implicitly indicate termination of the federated learning training. Alternatively, a signaling name or the like implicitly indicates termination of the federated learning training.
   It should be noted that termination of the federated learning training mentioned in each embodiment of this application may refer to completion of the federated learning training. For example, parameters of the federated learning model converge, a loss function of the federated learning model converges, the number of federated learning training times reaches a threshold, or a duration of the federated learning training reaches a duration threshold.
(2) Information indicating suspension of the federated learning training, that is, the second device explicitly indicates suspension of the federated learning training, so that the first device can perform the first operation based on the internal logic of the first device or recommendation information or the like in the following (7). Information in the following (2) to (7) may implicitly indicate suspension of the federated learning training. Alternatively, a signaling name or the like implicitly indicates suspension of the federated learning training.
(3) Model identification (Model ID) or identification information of the federated learning model. The model identification or identification information may be used to uniquely identify the federated learning model. The federated learning model may be a trained federated learning model, or a model whose training is suspended in the training process.
(4) Model information of the federated learning model. For example, the model information includes a network structure, weight parameters, input and output data, and other information of the federated learning model. The model information may further include download address information, storage address information, or the like of a federated learning model file. Input and output data information may be category information of input data, used to indicate what type of data should be input, what type of data should be output, or the like. The federated learning model may be a trained federated learning model, or a model whose training is suspended in the training process.
(5) Gradient information of the federated learning model. The gradient information may be transmitted in a form of a gradient file, such as download address information or storage address information of the gradient file, or may be transmitted by using this message. The gradient information may be gradient information used by a final global model. The gradient information of the final global model may be a sum of gradients fed back by multiple clients in this round (because the global model may be updated in a round based on multiple gradients fed back by multiple clients in this round, or may be updated after these gradients are aggregated, or may be updated by using all the gradients, or the like, but the feedback gradient information may be a sum of the multiple gradients, or multiple pieces of gradient information, or the like). The federated learning model may be a trained federated learning model, or a model whose training is suspended in the training process.
(6) Task identification information, where the task identification information is used to indicate a task category for which the federated learning model is used, for example, indicate a type of task that the federated learning model is used to perform. The task identification information and the following analytics identification have similar meanings and may replace each other. The task identification information may also be referred to as data analytics task identification (which may be an analytics ID) information.
(7) Task correlation identification information (which may be a correlation ID or a subscription correlation ID), where the task correlation identification information is used to indicate a target federated learning task, for example, uniquely indicate this federated learning task (which may also be referred to as a federated learning model training task). The information may be generated when the task is generated, or generated by the server when a global task is delivered, or the like.
(8) Cause information, where the cause information is used to indicate a cause why the second device sends the first message. Optionally, the cause information may be used to indicate at least one of the following: the federated learning process is ended; and the federated learning process is interrupted. Optionally, the cause information may further indicate a cause of the federated learning interruption. For example, the cause may be that accuracy of the second device is insufficient to continue the federated learning or that the second device is excluded. Optionally, the cause information may further indicate a cause of the end of the federated learning. For example, the cause may be that the federated learning model has converged, or that the number of iterations reaches a preset value, or that a training time expires.
(9) Recommendation information, where the recommendation information is used to indicate an operation to be performed by the first device after the first device receives the first message.

Optionally, the recommendation information may include at least one of the following:
a: Indication information for updating the federated learning model, which is used to instruct the first device to update the local federated learning model of the first device by using the received gradient information or the like, and may implicitly notify the first device that the first device can save and use the federated learning model (for example, the first device has permission to use the federated learning model).
b: Indication information for saving the federated learning model, which is used to indicate that the first device can use the received model information of the federated learning model to obtain a finally trained federated learning model, and may implicitly notify the first device that the first device can use the federated learning model (for example, the first device has the permission to use the federated learning model). The federated learning model may be a trained federated learning model, or a federated learning model whose training is suspended in the training process.
c: Indication information for deleting the local federated learning model, which is used to indicate that the first device needs to delete the local federated learning model of the first device, for example, indicate that the first device should not use the federated learning model or does not have the permission to use the federated learning model.
d: Indication information for stopping local federated learning training, which is used to indicate that the first device can stop the local federated learning training.

Optionally, in each embodiment of this application, after receiving the first message, the first device may perform the first operation based on the internal logic, or may also perform the first operation based on the recommendation information or the like in the first message. The first operation performed by the first device includes at least one of the following:
(1) Updating the local federated learning model. In this example, the first device may obtain the trained federated learning model or gradient information and update the local federated learning model by using the trained federated learning model or gradient information, and then use the model later.
(2) Receiving the federated learning model. In this example, the first device may obtain the trained federated learning model and use the trained federated learning model.
(3) Deleting the local federated learning model used in previous local federated learning training. In this example, if the first device does not require the trained federated learning model, the first device also knows that the local federated learning model does not need to be updated, and may delete the local federated learning model, thereby saving storage space.
(4) Stopping the local federated learning training. For asynchronous federated learning training, the first device may stop the local federated learning training to save computing power or the like.

It may be understood that the first operation performed by the first device may include at least one of (1) to (4) above. For example, the first device stops the local federated learning training, deletes the local federated learning model used in the previous local federated learning training, and receives the federated learning model. The federated learning model may be a trained federated learning model, or a federated learning model whose training is suspended in the training process.

Before the first device performs the first operation, the first device may further determine the first operation based on the internal logic of the first device and/or the first message. Specifically, when the first device receives the first message, the first device may determine the first operation based on the recommendation information in the first message, for example, perform the first operation as recommended. Alternatively, when the first device receives the first message, the first device may determine the first operation based on the model information or gradient information in the first message, such as receiving the federated learning model or updating the local model. Alternatively, when the first device receives the first message, the first device may determine the first operation based on the task identification information in the first message, such as performing a task by using the trained federated learning model.

Optionally, the first operation includes updating the local federated learning model and/or receiving the federated learning model, and after the first device receives the first message from the second device, the method further includes: the first device saves the federated learning model, where the federated learning model supports use by the first device.

Specifically, saving the federated learning model may mean saving the federated learning model to the first device after the first device updates the local federated learning model or after the first device receives the federated learning model. That the federated learning model supports use by the first device may mean that, when another device initiates a model request or a task request (such as a data analytics task) to the first device, the first device may use the federated learning model as a target model for the model request and feed back the model to the another device, or use the model to perform operations such as computation and inference to generate a task result corresponding to the task request, and feed back the result to the another device, or the like. The federated learning model may be a trained federated learning model, or a federated learning model whose training is suspended in the training process.

In each embodiment of this application, before the first device receives the first message from the second device in S202, the method further includes: the first device receives a federated learning training request message from the second device; and the first device sends a response message to the second device, where the response message includes request information for obtaining a federated learning model, and the request information may be model information, gradient information or the like for requesting to obtain the federated learning model and used to request the second device to send a global or aggregated federated learning model to the first device.

Optionally, the response message further includes a task correlation identifier, and the task correlation identifier is used to uniquely identify this model training task.

The training request message is used to request the first device to participate in the federated learning. The training request message includes at least one of task identification information, task correlation identification information, model information, gradient information of the model, identification information of the model, and the like. Specifically, the training request message may instruct the first device to use the model corresponding to the federated learning training and use data that can be collected by the first device for local federated learning training.

Optionally, the request information may include at least one of the following:
(1) first request information, where the first request information is used to request to obtain the federated learning model; and the federated learning model may be a trained federated learning model, or a federated learning model obtained through training when the federated learning is interrupted and stopped, and the same applies to the subsequent description;
(2) second request information, where the second request information is used to request to obtain the model information of the federated learning model (the model information includes network architecture information, download address information, or the like); and
(3) third request information, where the third request information is used to request to obtain gradient information of the federated learning model.

Optionally, the federated learning model may be a trained federated learning model, or a federated learning model whose training is suspended in the training process.

In each embodiment of this application, before the first device receives the first message from the second device in S202, the method further includes: after completing local federated learning training, the first device sends a second message to the second device, where the second message includes a training result of the local federated learning training, and request information for obtaining a federated learning model. The training result may be interim model information or interim gradient information of the federated learning model. Optionally, the second message may further include identification information of a federated learning task, identification information of the federated learning model, or the like.

The second message may be generated after the first device completes any round of federated learning training.

Optionally, the request information included in the second message may include at least one of the following:
(1) first request information, where the first request information is used to request to obtain the federated learning model;
(2) second request information, where the second request information is used to request to obtain the model information of the federated learning model (the model information includes network architecture information, download address information, or the like); and
(3) third request information, where the third request information is used to request to obtain the gradient information of the federated learning model.

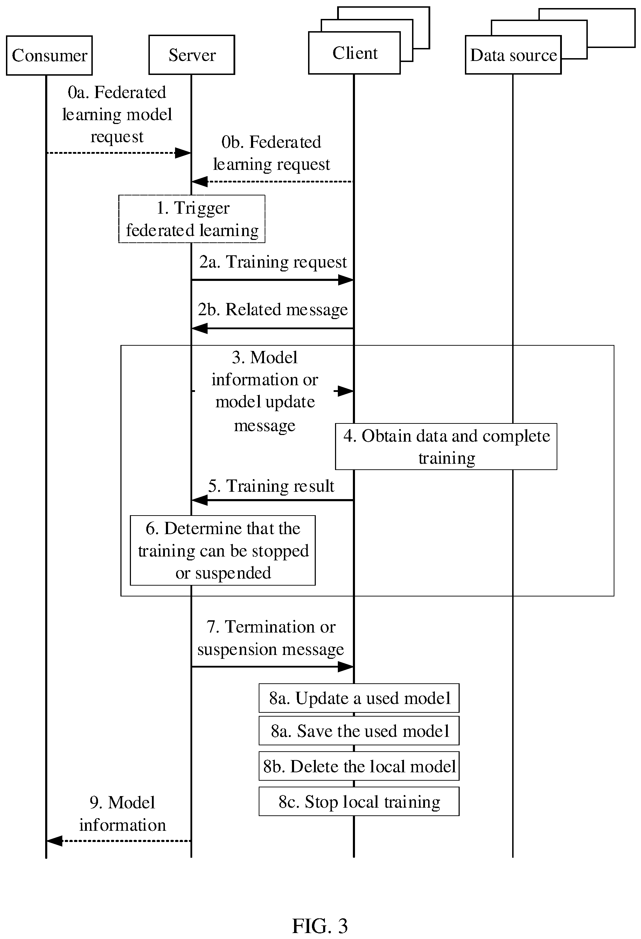

To describe in detail the model training method provided in the embodiments of this application, the following describes a specific embodiment. As shown in FIG. 3, this embodiment includes the following steps.

Step 0: Step 0 may be divided into the following steps 0a and 0b.

Step 0a: A federated learning consumer (such as an AnLF) sends a federated learning model request to a federated learning server (such as an MTLF), where the federated learning model request may be carried by an Nnwdaf_MLModelProvision_Subscribe message, and the federated learning model request is used to request to obtain a federated learning model (the federated learning model is hereinafter referred to as the model) for completing a task of the federated learning consumer. The server determines, based on a local configuration, the request of the federated learning consumer, or the like, whether to trigger federated learning, and determines to perform federated learning initialization and member selection.

Step 0b: A device without a federated learning server capability (such as a device with only a client capability or a device without a federated learning capability) may also send a federated learning request to a device with a federated learning server capability, to request federated learning and generate a required model.

In a case of step 0b, sending the federated learning request to the server by the device may also be considered as requesting to obtain a trained federated learning model. In particular, if the device has the client capability, the device may also participate in a federated learning process, so the server can also send a first message to the device.

Optionally, the federated learning request in this step may include at least one piece of the following information:
(1) a federated learning indication (FL indication), used to request to perform the federated learning process;
(2) an analytics identifier (Analytics ID), used to indicate that the federated learning process is requested to be performed for a task type correlated with an analytics ID, where the analytics ID may also be referred to as a data analytics task identifier, and is the same as the foregoing task identification information;
(3) an identifier (Model ID) of the federated learning model, where the identifier is used to uniquely identify the federated learning model;
(4) model filter information (Model filter information) (optional), used to define a range of the federated learning process, such as an area range, a time range, single network slice selection assistance information (Single Network Slice Selection Assistance Information, S-NSSAI), and a data network name (Data Network Name, DNN);
(5) model target (target of model) (optional), which may be used to specify a target of the federated learning process, such as a specific terminal or a plurality of terminals, all terminals within a range, or all terminals meeting a condition; and
(6) model reporting information (Model reporting information) (optional), which may be used to indicate reporting information of generated federated learning model information, such as a reporting time (start time, end time, or the like) and a reporting condition (periodic trigger, event trigger, or the like).

Step 1: The device with the federated learning server capability determines to perform federated learning, and performs member selection. It may initialize and define a policy for the federated learning process, such as specifying how many rounds of training are to be completed before status information is collected, or how many rounds of training are to be completed before training accuracy information is collected.

The member selection may be that the server looks up capability information, consent information, and the like of other devices to find devices that consent to participate in the federated learning and that meet requirements of the federated learning. For example, in a case that the server is an MTLF network element, the MTLF network element may perform network element discovery and selection via an NRF to find other network elements (such as other MTLFs) that meet the requirements of the federated learning training.

Step 2: The device with the federated learning server capability (server for short) and the device with the federated learning client capability (client for short) interact with each other to perform federated learning training. Specifically, this step may include the following steps.

Step 2a: The server sends a training request for federated learning training to the client, for example, by using an Nnwdaf_MLModelTraining_Subscribe message, requesting the client to participate in the federated learning and perform local training for the federated learning based on a global model and local data of the client.

The training request may include at least one piece of the following information:
(1) the analytics ID (Analytics ID), which is used to indicate that the federated learning process is requested to be performed for the task type correlated with the analytics ID, and indicate the type of task for which the federated learning model is used;
(2) the identifier (Model ID) of the federated learning model, where the identifier is used to uniquely identify the federated learning model;
(3) task correlation identification information (Correlation ID), used to uniquely indicate this federated learning task; and
(4) model initialization information, used to indicate model information and configuration information or the like in this round of federated learning, where a model description refers to the description of the model itself, such as an algorithm, an architecture, parameters, and hyperparameters that constitute the federated learning model, or refers to the model itself, such as a model file or address information of a model file; and the configuration information (which may also be referred to as guideline information, guideline information) in this round of federated learning may be used to indicate how to perform training in a local training process in this round of federated learning, for example, the number of rounds of local training to be performed, a type of data to be used, and a maximum training time.

Step 2b: After receiving the training request for federated learning training, the client may feed back related information about whether the client participates in the federated learning training to the server, for example, send the information by using an Nnwdaf_MLModelTraining_Subscribe Response message. The related information may include: whether the client participates in the federated learning training, indication information for requesting to obtain a final global model (global model) or an updated global model, the analytics identifier, the task correlation identification information, and other information. The updated global model refers to an aggregated model generated by the federated learning server when the federated learning is interrupted.

The indication information for requesting to obtain the final global model or the updated global model is used to indicate that after the federated learning training is ended or after the federated learning model is updated, the client wants to obtain information of the final global model or the updated global model, such as a model file of the final model or the updated global model or download address information or storage address information of a model file, or an updated gradient of the federated learning model. The updated global model information may help the client generate and obtain final global model information.

Step 3: During each iteration, the server sends model information and/or a model update message to the client.

The updated global model may be sent through step 2a, or the updated global model may be sent by using different signaling, or the client may be notified of gradient information for updating the global model, so that the client updates a local model of the client to perform a next round of local training. Identification information such as the task correlation identification information for indicating federated training, and the model information, and/or the gradient information or the like may be included.

Step 4: The client sends a request for obtaining data to a data source (data source, which refers to a network element that may provide data) in an area in which the client is located or to which the client belongs, to collect data for local federated learning.

The network element that provides data varies depending on different tasks. For example, it is a user plane function (User Plane Function, UPF), operation, administration and maintenance (Operation, Administration and Maintenance, OAM), or unified data management (unified data management, UDM).

The request for obtaining data may be carried by the following message: an Ndccf_DataManagement_Subscribe message, an Nnf_EventExposure message, Subscribe, and/or an Ndccf_DataManagement_Notify/Nnf_EventExposure_ Notify message, or the like.

The client uses the obtained data and model information to train the local model, and generates an interim result, and feeds back the interim result to the server, so that the server performs aggregation and updates the global model.

Step 5: After the client completes the local training, the client feeds back a training result of the local training to the server. The server may subsequently update the global model by using this training result. In this step, the interim model information or gradient information may be fed back by using Nnwdaf_MLModelTraining_Notify.

The message sent by the client to the server in this step may include at least one piece of the following information:
(1) result information, which is used to indicate the training result of this local training, and may be an interim model, an updated gradient, or the like;
(2) identification information of the requested final model, used to indicate the information of the final model that the client wants to obtain after the federated learning training is ended;
(3) identification information such as the analytics ID or the correlation ID;
   and
(4) consent information (consent info), status information (status info), and training accuracy information (accuracy info). The information may be used to help the server determine whether the client can continue to participate in a next round of federated learning training.

The consent information is used to indicate whether the member consents to participate in the next round of federated learning.

The status information is used to indicate status information of the client after the local training in this round of federated learning is completed. Specific status information may be: load (such as NF load) of the member; resource usage of the member (such as resource usage: CPU, memory, and disk; and GPU); and capability information of the member (for example, whether the member can participate in federated learning, and what type of federated learning the member can participate in), and the like.

The training accuracy information is used to indicate training accuracy information of the client in the local training in this round of federated learning. The training accuracy refers to performance of the model based on the local data after this local training, which may be a statistical calculation method and a numerical value corresponding to the method, such as accuracy and a specific value (80%) of the model, and a mean absolute error MAE and a value (0.1) thereof.

Step 6: The server generates a model through aggregation and determines that the model training can be stopped, or the server determines, based on a training suspension condition, to suspend the model training.

When a training ending condition is met, the server determines to stop the model training, where the training ending condition includes at least one of the following: all model parameters converge, a model loss function converges, parameters of the model locally trained by the client converge, a loss function of the model locally trained by the client converges, the number of training rounds reaches a threshold, the number of training times reaches a threshold, and a training duration reaches a duration threshold. These thresholds and convergence conditions may be incorporated into an internal design of the server in advance or the like.

When the training suspension condition is met, the server determines to suspend the model training. For example, the training suspension condition includes one or more of the following: computing power of the client is reduced, load of the client is excessively high, and resource usage is excessively high.

Step 7: The server sends a termination message to the client, notifying the client participating in the federated learning that the federated learning has been terminated; or the server sends a suspension message to the client, notifying the client participating in the federated learning that the federated learning has been suspended.

Specifically, the server may send information indicating termination or suspension of the training to the client by using an Nnwdaf_MLModelTraining_unsubscribe message, or may send information indicating termination or suspension of the training to the client by using other signaling messages. Alternatively, a final result of the federated learning training, such as the final model or a final gradient may be sent, or recommendation information may be sent to notify the client what actions can be performed for the federated learning.

Whether to send the model information (such as the model information or the gradient information) may be determined based on internal logic of the server or requested by the client during interaction with the federated learning server, for example, in step 2b and step 5. Alternatively, a message requesting to obtain the federated learning model is received in step 0b. Specifically, request information from devices such as the client is received in step 2b and/or step 5. For example, in step 2b, a first device sends a response message to a second device, where the response message includes request information for obtaining a trained federated learning model; and in step 5, after completing local federated learning training, the first device sends a second message to the second device, where the second message includes a training result of the local federated learning training and the request information for obtaining the trained federated learning model. Before sending the termination message, the server may further determine content to be carried in the termination message. Specifically, in a case that the request information is received from the client, the server may determine the termination message. For example, in a case that the request information includes a request for the model information, the server determines that the termination message carries the model information of the federated learning model. For another example, in a case that the request information includes a request for the gradient information of the model, the server determines that the termination message carries the gradient information of the federated learning model.

Specifically, the termination (or suspension) message sent by the server to the client may include at least one of the following:
(1) Task identification information, where the task identification information is used to indicate a task category for which the federated learning model is used, for example, indicate a type of task that the federated learning model is used to perform.
(2) Model identification (Model ID) or identification information of the federated learning model. The model identification or identification information may be used to uniquely identify the federated learning model.
(3) Task correlation identification information, where the task correlation identification information is used to indicate a target federated learning task, for example, uniquely indicate the federated learning task.
(4) Information indicating termination (or suspension) of the federated learning training, that is, the second device explicitly indicates termination (or suspension) of the federated learning training, so that the first device can perform a first operation based on internal logic of the first device or the following recommendation information.
(5) Model information of the federated learning model. For example, the model information includes a network structure, weight parameters, input and output data, and other information of the federated learning model. The model information may further include download address information, storage address information, or the like of a federated learning model file.
(6) The gradient information of the federated learning model. The gradient information may be transmitted in a form of a gradient file, and the gradient information may be gradient information used by the final global model.

The server may provide the client with the final model information or gradient information used in the final update. The client may update a local federated learning model (a federated learning model locally saved and used in previous federated learning) of the client by using the gradient information, to obtain the final global model. The final global model refers to an aggregated model generated by the federated learning server after the federated learning process is ended.

Specifically, the final global model may include at least one of the following: the model file (including the network structure, weight parameters, input and output data, and the like of the model); and the download address information or storage address information of the model file (used to indicate a storage address of the model file or where the model file can be downloaded).

The gradient information may be transmitted in a form of a gradient file and includes the gradient information used for updating the model.

(7) Cause information, where the cause information is used to indicate a cause why the server sends the termination (or suspension) message.

(8) Recommendation information, where the recommendation information is used to indicate an operation to be performed by the first device after the first device receives the first message.

Optionally, the recommendation information may include at least one of the following:
a: Indication information for updating the federated learning model, which is used to instruct the first device to update the local federated learning model of the first device by using the received gradient information or the like, and may implicitly notify the first device that the first device can save and use the federated learning model (for example, the first device has permission to use the federated learning model).
b: Indication information for saving the federated learning model, which is used to indicate that the first device can use the received model information of the federated learning model to obtain a finally trained federated learning model, and may implicitly notify the first device that the first device can use the federated learning model (for example, the first device has the permission to use the federated learning model).
c: Indication information for deleting the local federated learning model, which is used to indicate that the first device needs to delete the local federated learning model of the first device, for example, indicate that the first device should not use the federated learning model or does not have the permission to use the federated learning model.
d: Indication information for stopping local federated learning training, which is used to indicate that the first device can stop the local federated learning training.

Steps 8a to 8c: After receiving the termination message, the client performs actions. Specifically, after the client knows that the federated learning training is ended, the client may determine subsequent actions based on the internal logic of the client, or the recommendation information or model information or the like sent by the server. The subsequent actions may be: updating the local model to the global model, and receiving the final global model for subsequent use; deleting the local model used in previous training; stopping training, and the like.

8a: The client updates the local model to obtain the final model, and may subsequently use the final model. The client receives the gradient information for the model update (for example, in step 7), and updates the local model by using the gradient information, thereby obtaining the final model. In addition, the client may subsequently use the model, for example, subsequently send the model to other devices to perform some data analytics tasks.

8b: The client saves the final model and may subsequently use the final model. The client receives the final model. For example, in step 7, the client receives the model file and/or the download address information or storage address information of the model file to obtain the final model.

8c: The client deletes the local model. Specifically, the client deletes the local model related to the federated learning training. Possibly because the client has not initiated a request, the client has not received the final model or the like related to the federated learning. Alternatively, because the client will not use the model later, the client itself chooses to delete the model or the like. If the client still wants to obtain the final model from the federated learning training, the client may reinitiate an ordinary model obtaining request to the server, for example, by sending Nnwdaf_MLModelProvision_Subscribe and Nnwdaf_MLModelProvision_Notify messages.

8d: The client stops the local training. For asynchronous federated learning training, training of different clients varies. Some clients may have completed a round of local training, while other clients are still performing local training. A client that is still performing local training may stop the local training after receiving a federated learning termination message. This action may also be used in combination with other actions, that is, not only stopping the local training, but also saving the received final model or the like.

Step 9: After the server completes the federated learning model training, the server sends the model information to the consumer. There is no fixed sequence between this step and steps 7 and 8, that is, this step may also occur before step 7.

The model information may include at least one of the following:
(1) model identification (Model ID) or identification information of the trained federated learning model, where the model identification or identification information may be used to uniquely identify the federated learning model;
(2) a federated learning indication (FL indication), used to indicate the model generated by the federated learning;
(3) the model file, including the network structure, weight parameters, input and output data, and the like of the model;
(4) the download address information or storage address information of the model file, used to indicate the storage address of the model file or where the model file can be downloaded;
(5) the analytics ID (Analytics ID), used to indicate that the federated learning model is suitable for an inference task type;
(6) model filter information (Model filter information), used to indicate reporting information of generated federated learning model information, such as a reporting time (start time, end time, or the like) and a reporting condition (periodic trigger, event trigger, or the like);
(7) effective area information, indicating an area in which the federated learning model is applicable; and
(8) effective time information, indicating the time when the federated learning model is applicable.

The server may send the model information by using the following message: Nnwdaf_MLModelProvision_Notify or Nnwdaf_MLModelInfo_Response.

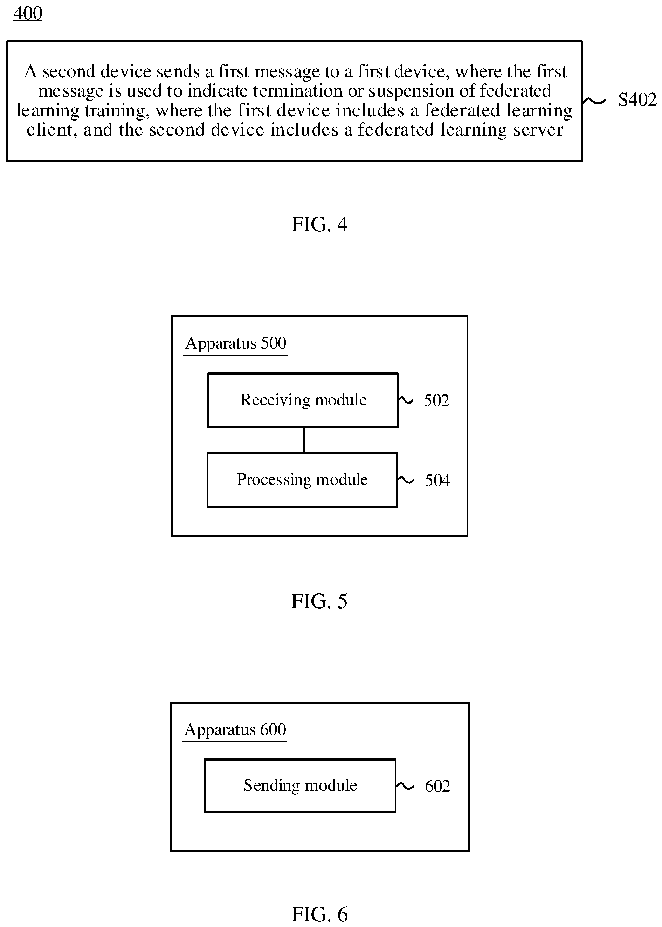

The model training method according to the embodiments of this application is described in detail above with reference to FIG. 2 and FIG. 3. A model training method according to another embodiment of this application is hereinafter described in detail with reference to FIG. 4. It may be understood that interaction between a second device and a first device described from a perspective of the second device is the same as or corresponds to the description on the first device side in the method shown in FIG. 2. Therefore, related descriptions are appropriately omitted to avoid repetition.

FIG. 4 is a schematic flowchart of a model training method according to an embodiment of this application. The method may be applied to a second device. As shown in FIG. 4, the method 400 includes the following steps.

S402: The second device sends a first message to a first device, where the first message is used to indicate termination or suspension of federated learning training, where the first device includes a federated learning client, and the second device includes a federated learning server.

In this embodiment of this application, after the federated learning training is terminated or suspended, the server may send the first message to the client, where the first message is used to indicate termination or suspension of the federated learning training, so that the first device can know that the federated learning training is ended and can further perform a first operation based on the first message, such as stopping local federated learning training, or deleting a local federated learning model, to avoid occupying space and computing power of the client and improve performance of the client.

Optionally, in an embodiment, the first message includes at least one of the following:
(1) information indicating termination of the federated learning training;
(2) information indicating suspension of the federated learning training;
(3) model identification or identification information of a federated learning model;
(4) model information of the federated learning model;
(5) gradient information of the federated learning model;
(6) task identification information, where the task identification information is used to indicate a task category for which the federated learning model is used;
(7) task correlation identification information, where the task correlation identification information is used to indicate a target federated learning task;
(8) cause information, where the cause information is used to indicate a cause why the second device sends the first message, where
   optionally, the cause information is used to indicate at least one of the following: a federated learning process is ended; and the federated learning process is interrupted; and
(9) recommendation information, where the recommendation information is used to indicate an operation to be performed by the first device after the first device receives the first message.

Optionally, in an embodiment, the recommendation information is used to instruct the first device to perform at least one of the following after receiving the first message: (1) updating a local federated learning model; (2) receiving a federated learning model; (3) deleting a local federated learning model used in previous local federated learning training; and (4) stopping local federated learning training.

Optionally, in an embodiment, before the second device sends the first message to the first device, the method further includes: the second device sends a federated learning training request message to the first device; and the second device receives a response message from the first device, where the response message includes request information for obtaining a federated learning model.

Optionally, in an embodiment, before the second device sends the first message to the first device, the method further includes: the second device receives a second message from the first device, where the second message includes a training result of local federated learning training by the first device, and request information for obtaining a federated learning model.

Optionally, in an embodiment, the request information includes at least one of the following: (1) first request information, where the first request information is used to request to obtain the federated learning model; (2) second request information, where the second request information is used to request to obtain model information of the federated learning model; and (3) third request information, where the third request information is used to request to obtain gradient information of the federated learning model.

Optionally, in an embodiment, after receiving the request information for obtaining the federated learning model, the second device sends the first message based on the request information for obtaining the federated learning model, where the first message includes at least one of the following: model information of the federated learning model; and gradient information of the federated learning model, where the federated learning model includes a final global model or an updated global model.

The model training method provided in the embodiments of this application may be performed by a model training apparatus. A model training apparatus provided in the embodiments of this application is described by assuming that the model training method is performed by the model training apparatus in the embodiments of this application.

FIG. 5 is a schematic structural diagram of a model training apparatus according to an embodiment of this application. The apparatus may be applied to a first device. As shown in FIG. 5, the apparatus 500 includes the following modules:
a receiving module 502, configured to receive a first message from a second device, where the first message is used to indicate termination or suspension of federated learning training; and
a processing module 504, configured to perform a first operation based on the first message, where the first device includes a federated learning client, and the second device includes a federated learning server.

In this embodiment of this application, after the federated learning training is terminated or suspended, the server may send the first message to the client, where the first message is used to indicate termination or suspension of the federated learning training, so that the first device can know that the federated learning training is ended and can perform the first operation based on the first message, such as stopping local federated learning training, or deleting a local federated learning model, to avoid occupying space and computing power of the client and improve performance of the client.

Optionally, in an embodiment, the first message includes at least one of the following:
(1) information indicating termination of the federated learning training;
(2) information indicating suspension of the federated learning training;
(3) model identification or identification information of a federated learning model;
(4) model information of the federated learning model;
(5) gradient information of the federated learning model;
(6) task identification information, where the task identification information is used to indicate a task category for which the federated learning model is used;
(7) task correlation identification information, where the task correlation identification information is used to indicate a target federated learning task;
(8) cause information, where the cause information is used to indicate a cause why the second device sends the first message; and
(9) recommendation information, where the recommendation information is used to indicate an operation to be performed by the first device after the first device receives the first message.

Optionally, in an embodiment, the first operation includes at least one of the following:
(1) updating a local federated learning model;
(2) receiving a federated learning model;
(3) deleting a local federated learning model used in previous local federated learning training; and
(4) stopping local federated learning training.

Optionally, in an embodiment, the first operation includes updating the local federated learning model and/or receiving the federated learning model, and the processing module 504 is further configured to save the federated learning model, where the federated learning model supports use by the first device.

Optionally, in an embodiment, the receiving module 502 is further configured to receive a federated learning training request message from the second device; and the apparatus further includes a sending module, configured to send a response message to the second device, where the response message includes request information for obtaining a federated learning model.

Optionally, in an embodiment, the apparatus further includes a sending module, configured to send a second message to the second device after local federated learning training is completed, where the second message includes a training result of the local federated learning training and request information for obtaining a federated learning model.

Optionally, in an embodiment, the request information includes at least one of the following: (1) first request information, where the first request information is used to request to obtain the federated learning model; (2) second request information, where the second request information is used to request to obtain model information of the federated learning model; and (3) third request information, where the third request information is used to request to obtain gradient information of the federated learning model.

For the apparatus 500 in this embodiment of this application, refer to the processes of the method 200 in the corresponding embodiment of this application. In addition, the units/modules of the apparatus 500 and other operations and/or functions described above are used to implement the corresponding processes of the method 200, with the same or equivalent technical effect achieved. For brevity, details are not described herein again.

The model training apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

FIG. 6 is a schematic structural diagram of a model training apparatus according to an embodiment of this application. The apparatus may be applied to a second device. As shown in FIG. 6, the apparatus 600 includes the following module:
a sending module 602, which may be configured to send a first message to a first device, where the first message is used to indicate termination or suspension of federated learning training, where the first device includes a federated learning client, and the second device includes a federated learning server.

Optionally, the apparatus 600 may further include a processing module and the like.

In this embodiment of this application, after the federated learning training is terminated or suspended, the server may send the first message to the client, where the first message is used to indicate termination or suspension of the federated learning training, so that the first device can know that the federated learning training is ended and can perform a first operation based on the first message, such as stopping local federated learning training, or deleting a local federated learning model, to avoid occupying space and computing power of the client and improve performance of the client.

Optionally, in an embodiment, the first message includes at least one of the following:
(1) information indicating termination of the federated learning training;
(2) information indicating suspension of the federated learning training;
(3) model identification or identification information of a federated learning model;
(4) model information of the federated learning model;
(5) gradient information of the federated learning model;
(6) task identification information, where the task identification information is used to indicate a task category for which the federated learning model is used;
(7) task correlation identification information, where the task correlation identification information is used to indicate a target federated learning task;
(8) cause information, where the cause information is used to indicate a cause why the second device sends the first message; and
(9) recommendation information, where the recommendation information is used to indicate an operation to be performed by the first device after the first device receives the first message.

Optionally, in an embodiment, the sending module 602 is further configured to send a federated learning training request message to the first device; and the apparatus further includes a receiving module, configured to receive a response message from the first device, where the response message includes request information for obtaining a federated learning model.

Optionally, in an embodiment, the apparatus further includes a receiving module, configured to receive a second message from the first device, where the second message includes a training result of local federated learning training by the first device, and request information for obtaining a federated learning model.

Optionally, in an embodiment, the request information includes at least one of the following: (1) first request information, where the first request information is used to request to obtain the federated learning model; (2) second request information, where the second request information is used to request to obtain model information of the federated learning model; and (3) third request information, where the third request information is used to request to obtain gradient information of the federated learning model.

For the apparatus 600 in this embodiment of this application, refer to the processes of the method 400 in the corresponding embodiment of this application. In addition, the units/modules of the apparatus 600 and other operations and/or functions described above are used to implement the corresponding processes of the method 400, with the same or equivalent technical effect achieved. For brevity, details are not described herein again.

The model training apparatus provided in this embodiment of this application can implement each process implemented in the method embodiments in FIG. 2 to FIG. 4, with the same technical effect achieved. To avoid repetition, details are not described herein again.

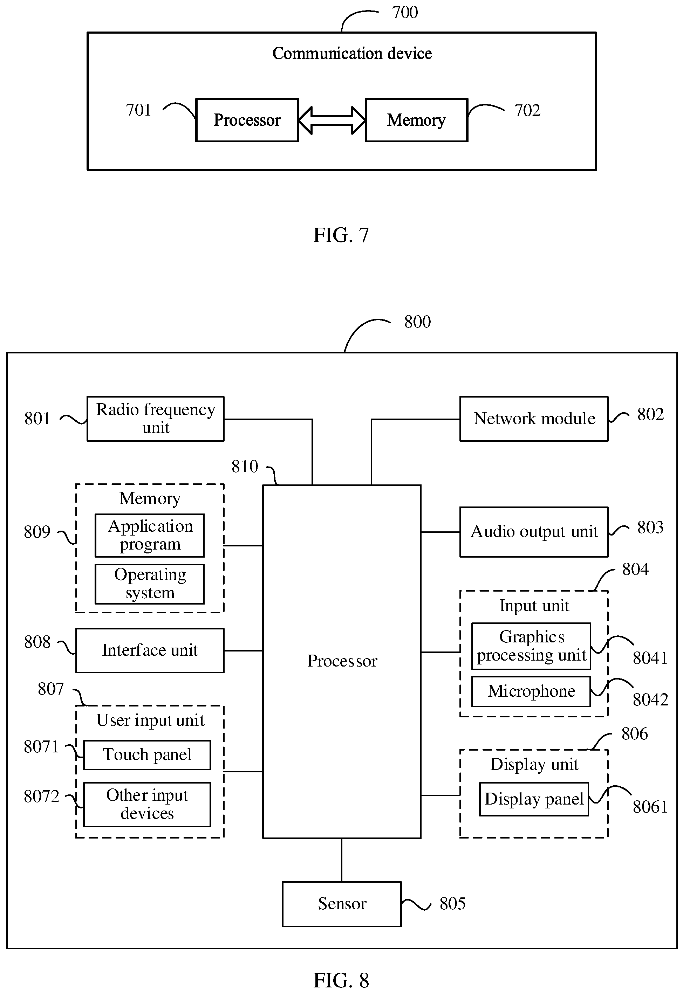

Optionally, as shown in FIG. 7, an embodiment of this application further provides a communication device 700, including a processor 701 and a memory 702. The memory 702 stores a program or instructions capable of running on the processor 701. For example, when the communication device 700 is a terminal, and the program or instructions are executed by the processor 701, the steps of the foregoing model training method embodiment are implemented, with the same technical effect achieved. When the communication device 700 is a network-side device, and the program or instructions are executed by the processor 701, the steps of the foregoing model training method embodiment are implemented, with the same technical effect achieved. To avoid repetition, details are not described herein again.

An embodiment of this application further provides a terminal, including a processor and a communication interface. The communication interface is configured to receive a first message from a second device, where the first message is used to indicate termination or suspension of federated learning training; and the processor is configured to perform a first operation based on the first message, where the terminal includes a federated learning client, and the second device includes a federated learning server. Alternatively, the communication interface is configured to send a first message to a first device, where the first message is used to indicate termination or suspension of federated learning training, where the first device includes a federated learning client, and the terminal includes a federated learning server.

The terminal embodiment corresponds to the foregoing terminal-side method embodiment, and each implementation process and implementation of the foregoing method embodiment can be applied to the terminal embodiment, with the same technical effect achieved. Specifically, FIG. 8 is a schematic diagram of a hardware structure of a terminal for implementing an embodiment of this application.

The terminal 800 includes but is not limited to at least some components such as a radio frequency unit 801, a network module 802, an audio output unit 803, an input unit 804, a sensor 805, a display unit 806, a user input unit 807, an interface unit 808, a memory 809, and a processor 810.

A person skilled in the art may understand that the terminal 800 may further include a power supply (for example, a battery) supplying power to all components. The power supply may be logically connected to the processor 810 through a power management system. In this way, functions such as charge management, discharge management, and power consumption management are implemented by using the power management system. The terminal structure shown in FIG. 8 does not constitute a limitation on the terminal. The terminal may include more or fewer components than those shown in the figure, or some components are combined, or component arrangements are different. Details are not described herein again.

It should be understood that, in this embodiment of this application, the input unit 804 may include a graphics processing unit (Graphics Processing Unit, GPU) 8041 and a microphone 8042. The GPU 8041 processes image data of a still picture or video obtained by an image capture apparatus (such as a camera) in a video capture mode or an image capture mode. The display unit 806 may include a display panel 8061, and the display panel 8061 may be configured in a form of a liquid crystal display, an organic light-emitting diode, or the like. The user input unit 807 includes at least one of a touch panel 8071 and other input devices 8072. The touch panel 8071 is also referred to as a touchscreen. The touch panel 8071 may include two parts: a touch detection apparatus and a touch controller. The other input devices 8072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 801 may transmit the downlink data to the processor 810 for processing. In addition, the radio frequency unit 801 may send uplink data to the network-side device. Usually, the radio frequency unit 801 includes but is not limited to an antenna, an amplifier, a transceiver, a coupler, a low noise amplifier, a duplexer, and the like.

The memory 809 may be configured to store software programs or instructions and various data. The memory 809 may primarily include a first storage area for storing programs or instructions and a second storage area for storing data. The first storage area may store an operating system, an application program or instructions required by at least one function (such as an audio play function and an image play function), and the like. In addition, the memory 809 may include a volatile memory or a non-volatile memory, or the memory 809 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 809 in this embodiment of this application includes but is not limited to these and any other suitable types of memories.

The processor 810 may include one or more processing units. Optionally, the processor 810 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively not be integrated in the processor 810.

The radio frequency unit 801 may be configured to receive a first message from a second device, where the first message is used to indicate termination or suspension of federated learning training; and the processor 810 may be configured to perform a first operation based on the first message, where the terminal includes a federated learning client, and the second device includes a federated learning server. Alternatively, the radio frequency unit 801 is configured to send a first message to a first device, where the first message is used to indicate termination or suspension of federated learning training, where the first device includes a federated learning client, and the terminal includes a federated learning server.

In this embodiment of this application, after the federated learning training is terminated or suspended, the server may send the first message to the client, where the first message is used to indicate termination or suspension of the federated learning training, so that the first device can know that the federated learning training is ended and can perform the first operation based on the first message, such as stopping local federated learning training, or deleting a local federated learning model, to avoid occupying space and computing power of the client and improve performance of the client.

The terminal 800 provided in this embodiment of this application can further implement each process of the foregoing model training method embodiment, with the same technical effect achieved. To avoid repetition, details are not described herein again.

An embodiment of this application further provides a network-side device, including a processor and a communication interface. The communication interface is configured to receive a first message from a second device, where the first message is used to indicate termination or suspension of federated learning training; and the processor is configured to perform a first operation based on the first message, where the network-side device includes a federated learning client, and the second device includes a federated learning server. Alternatively, the communication interface is configured to send a first message to a first device, where the first message is used to indicate termination or suspension of federated learning training, where the first device includes a federated learning client, and the network-side device includes a federated learning server.

The network-side device embodiment corresponds to the foregoing method embodiment of the network-side device, and each implementation process and implementation of the foregoing method embodiment can be applied to the network-side device embodiment, with the same technical effect achieved.

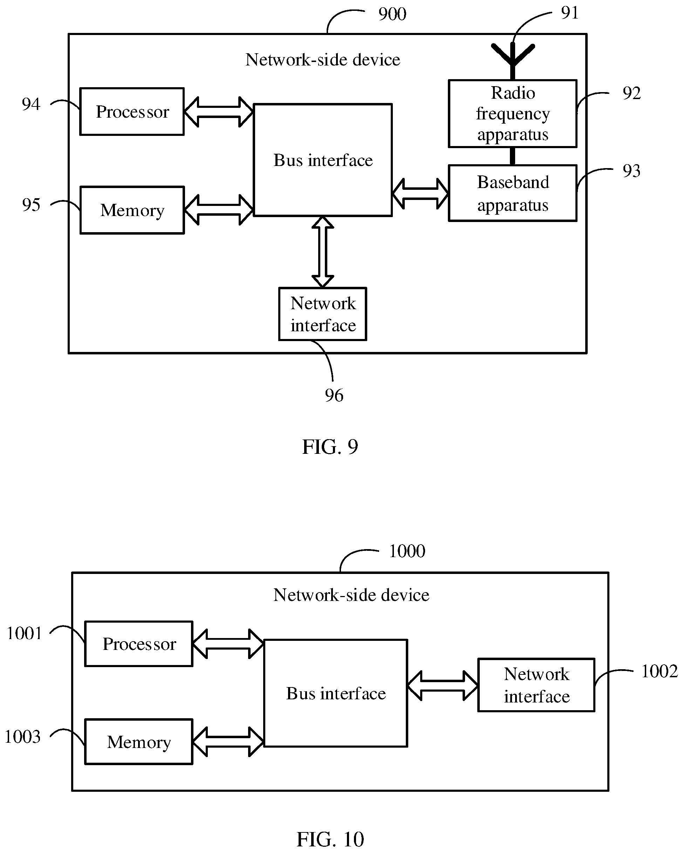

Specifically, an embodiment of this application further provides a network-side device. As shown in FIG. 9, the network-side device 900 includes an antenna 91, a radio frequency apparatus 92, a baseband apparatus 93, a processor 94, and a memory 95. The antenna 91 is connected to the radio frequency apparatus 92. In an uplink direction, the radio frequency apparatus 92 receives information by using the antenna 91, and sends the received information to the baseband apparatus 93 for processing. In a downlink direction, the baseband apparatus 93 processes to-be-sent information, and sends the information to the radio frequency apparatus 92; and the radio frequency apparatus 92 processes the received information and then sends the information out by using the antenna 91.

The method performed by the network-side device in the foregoing embodiment may be implemented in the baseband apparatus 93. The baseband apparatus 93 includes a baseband processor.

The baseband apparatus 93 may include, for example, at least one baseband unit, where a plurality of chips are disposed on the baseband unit. As shown in FIG. 9, one of the chips is, for example, the baseband processor, connected to the memory 95 by using a bus interface, to invoke a program in the memory 95 to perform the operation of the network device shown in the foregoing method embodiment.

The network-side device may further include a network interface 96, where the interface is, for example, a common public radio interface (common public radio interface, CPRI).

Specifically, the network-side device 900 in this embodiment of the present invention further includes a program or instructions stored in the memory 95 and capable of running on the processor 94. When the processor 94 invokes the program or instructions in the memory 95, the method performed by each module shown in FIG. 5 or FIG. 6 is performed, with the same technical effect achieved. To avoid repetition, details are not described herein again.

Specifically, an embodiment of this application further provides a network-side device. As shown in FIG. 10, the network-side device 1000 includes a processor 1001, a network interface 1002, and a memory 1003. The network interface 1002 is, for example, a common public radio interface (common public radio interface, CPRI).

Specifically, the network-side device 1000 in this embodiment of this application further includes a program or instructions stored in the memory 1003 and capable of running on the processor 1001. When the processor 1001 invokes the program or instruction in the memory 1003, the method performed by each module shown in FIG. 5 or FIG. 6 is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing model training method embodiment is implemented, with the same technical effect achieved. To avoid repetition, details are not described herein again.

The processor is a processor in the terminal in the foregoing embodiment. The readable storage medium may be non-volatile or non-transitory. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing model training method embodiment, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing model training method embodiment, with the same technical effect achieved. To avoid repetition, details are not described herein again.

An embodiment of this application further provides a model training system, including a terminal and a network-side device. The terminal may be configured to perform the steps of the foregoing model training method. The network-side device may be configured to perform the steps of the foregoing model training method.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A model training method, comprising:
receiving, by a first device, a first message from a second device, wherein the first message is used to indicate termination or suspension of federated learning training; and
performing, by the first device, a first operation based on the first message, wherein the first device comprises a federated learning client, and the second device comprises a federated learning server.

2. The method according to claim 1, wherein the first message comprises at least one of the following:
information indicating termination of the federated learning training;
information indicating suspension of the federated learning training;
model identification or identification information of a federated learning model;
model information of the federated learning model;
gradient information of the federated learning model;
task identification information, wherein the task identification information is used to indicate a task category for which the federated learning model is used;
task correlation identification information, wherein the task correlation identification information is used to indicate a target federated learning task;
cause information, wherein the cause information is used to indicate a cause why the second device sends the first message; and
recommendation information, wherein the recommendation information is used to indicate an operation to be performed by the first device after the first device receives the first message.

3. The method according to claim 2, wherein the cause information is used to indicate at least one of the following:
a federated learning process is ended; and
the federated learning process is interrupted.

4. The method according to any one of claims 1 to 3, wherein the first operation comprises at least one of the following:
updating a local federated learning model;
receiving a federated learning model;
deleting a local federated learning model used in previous local federated learning training; and
stopping local federated learning training.

5. The method according to claim 4, wherein the first operation comprises updating the local federated learning model and/or receiving the federated learning model, and after the receiving, by a first device, a first message from a second device, the method further comprises:
saving, by the first device, the federated learning model, wherein the federated learning model supports use by the first device.

6. The method according to claim 1, wherein before the receiving, by a first device, a first message from a second device, the method further comprises:
receiving, by the first device, a federated learning training request message from the second device; and
sending, by the first device, a response message to the second device, wherein the response message comprises request information for obtaining a federated learning model.

7. The method according to claim 1, wherein before the receiving, by a first device, a first message from a second device, the method further comprises:
after completing local federated learning training, sending, by the first device, a second message to the second device, wherein the second message comprises a training result of the local federated learning training and request information for obtaining a federated learning model.

8. The method according to claim 6 or 7, wherein the request information comprises at least one of the following:
first request information, wherein the first request information is used to request to obtain the federated learning model;
second request information, wherein the second request information is used to request to obtain model information of the federated learning model; and
third request information, wherein the third request information is used to request to obtain gradient information of the federated learning model.

9. The method according to any one of claims 1 to 8, wherein the federated learning model comprises a final global model or an updated global model.

10. A model training method, comprising:
sending, by a second device, a first message to a first device, wherein the first message is used to indicate termination or suspension of federated learning training, wherein
the first device comprises a federated learning client, and the second device comprises a federated learning server.

11. The method according to claim 10, wherein the first message comprises at least one of the following:
information indicating termination of the federated learning training;
information indicating suspension of the federated learning training;
model identification or identification information of a federated learning model;
model information of the federated learning model;
gradient information of the federated learning model;
task identification information, wherein the task identification information is used to indicate a task category for which the federated learning model is used;
task correlation identification information, wherein the task correlation identification information is used to indicate a target federated learning task;
cause information, wherein the cause information is used to indicate a cause why the second device sends the first message; and
recommendation information, wherein the recommendation information is used to indicate an operation to be performed by the first device after the first device receives the first message.

12. The method according to claim 11, wherein the cause information is used to indicate at least one of the following:
a federated learning process is ended; and
the federated learning process is interrupted.

13. The method according to claim 11, wherein the recommendation information is used to instruct the first device to perform at least one of the following after receiving the first message:
updating a local federated learning model;
receiving a federated learning model;
deleting a local federated learning model used in previous local federated learning training; and
stopping local federated learning training.

14. The method according to claim 10, wherein before the sending, by a second device, a first message to a first device, the method further comprises:
sending, by the second device, a federated learning training request message to the first device; and
receiving, by the second device, a response message from the first device, wherein the response message comprises request information for obtaining a federated learning model.

15. The method according to claim 10, wherein before the sending, by a second device, a first message to a first device, the method further comprises:
receiving, by the second device, a second message from the first device, wherein the second message comprises a training result of local federated learning training by the first device, and request information for obtaining a federated learning model.

16. The method according to claim 14 or 15, wherein the sending, by a second device, a first message to a first device comprises:
sending, by the second device, the first message based on the request information for obtaining the federated learning model, wherein the first message comprises at least one of the following:
model information of the federated learning model; and
gradient information of the federated learning model, wherein
the federated learning model comprises a final global model or an updated global model.

17. A model training apparatus, applied to a first device and comprising:
a receiving module, configured to receive a first message from a second device, wherein the first message is used to indicate termination or suspension of federated learning training; and
a processing module, configured to perform a first operation based on the first message, wherein the first device comprises a federated learning client, and the second device comprises a federated learning server.

18. The apparatus according to claim 17, wherein the first message comprises at least one of the following:
information indicating termination of the federated learning training;
information indicating suspension of the federated learning training;
model identification or identification information of a federated learning model;
model information of the federated learning model;
gradient information of the federated learning model;
task identification information, wherein the task identification information is used to indicate a task category for which the federated learning model is used;
task correlation identification information, wherein the task correlation identification information is used to indicate a target federated learning task; and
recommendation information, wherein the recommendation information is used to indicate an operation to be performed by the first device after the first device receives the first message.

19. The apparatus according to claim 17 or 18, wherein the first operation comprises at least one of the following:
updating a local federated learning model;
receiving a federated learning model;
deleting a local federated learning model used in previous local federated learning training; and
stopping local federated learning training.

20. The apparatus according to claim 19, wherein the first operation comprises updating the local federated learning model and/or receiving the federated learning model, and the processing module is further configured to save the federated learning model, wherein the federated learning model supports use by the first device.

21. The apparatus according to claim 17, wherein
the receiving module is further configured to receive a federated learning training request message from the second device; and
the apparatus further comprises a sending module, configured to send a response message to the second device, wherein the response message comprises request information for obtaining a federated learning model.

22. The apparatus according to claim 17, wherein the apparatus further comprises a sending module, configured to send a second message to the second device after local federated learning training is completed, wherein the second message comprises a training result of the local federated learning training and request information for obtaining a federated learning model.

23. The apparatus according to any one of claims 17 to 22, wherein the federated learning model comprises a final global model or an updated global model.

24. A model training apparatus, applied to a second device and comprising:
a sending module, configured to send a first message to a first device, wherein the first message is used to indicate termination or suspension of federated learning training, wherein
the first device comprises a federated learning client, and the second device comprises a federated learning server.

25. The apparatus according to claim 24, wherein the first message comprises at least one of the following:
information indicating termination of the federated learning training;
information indicating suspension of the federated learning training;
model identification or identification information of a federated learning model;
model information of the federated learning model;
gradient information of the federated learning model;
task identification information, wherein the task identification information is used to indicate a task category for which the federated learning model is used;
task correlation identification information, wherein the task correlation identification information is used to indicate a target federated learning task; and
recommendation information, wherein the recommendation information is used to indicate an operation to be performed by the first device after the first device receives the first message.

26. The apparatus according to claim 24, wherein
the sending module is further configured to send a federated learning training request message to the first device; and
the apparatus further comprises a receiving module, configured to receive a response message from the first device, wherein the response message comprises request information for obtaining a federated learning model.

27. The apparatus according to claim 24, wherein the apparatus further comprises a receiving module, configured to receive a second message from the first device, wherein the second message comprises a training result of local federated learning training by the first device, and request information for obtaining a federated learning model.

28. A terminal, comprising a processor and a memory, wherein the memory stores a program or instructions capable of running on the processor, and when the program or instructions are executed by the processor, the steps of the method according to any one of claims 1 to 16 are implemented.

29. A network-side device, comprising a processor and a memory, wherein the memory stores a program or instructions capable of running on the processor, and when the program or instructions are executed by the processor, the steps of the method according to any one of claims 1 to 16 are implemented.

30. A readable storage medium, wherein the readable storage medium stores a program or instructions, and when the program or instructions are executed by a processor, the steps of the method according to any one of claims 1 to 16 are implemented.
